# EUROPÄISCHE PATENTSCHRIFT

(11) **EP 2 160 780 B1**
(45) Veröffentlichungstag und Bekanntmachung des Hinweises auf die Patenterteilung: **02.03.2011**
(21) Anmeldenummer: 08734939.5
(22) Anmeldetag: 01.04.2008
(51) Int. Cl.: H01M 4/86, H01M 4/88, H01M 4/90, H01M 4/92, H01M 8/10

(54) **BRENNSTOFFZELLE MIT KATALYSATOR UND DEREN VERWENDUNG**
FUEL CELL WITH CATALYZER AND USE THEREOF
PILE À COMBUSTIBLE MUNIE D'UN CATALYSEUR ET SON EMPLOI

(30) Priorität: 14.06.2007 DE 102007028007
(43) Veröffentlichungstag der Anmeldung: 10.03.2010
(73) Patentinhaber: Blücher GmbH, 40699 Erkrath (DE)
(72) Erfinder: VON BLÜCHER, Hasso, 40699 Erkrath (DE)
(74) Vertreter: Gesthuysen, Michael
(86) Internationale Anmeldenummer: PCT/EP2008/002589
(87) Internationale Veröffentlichungsnummer: WO 2008/151685

(56) Entgegenhaltungen:
- DE-A1- 19 616 160
- DE-A1- 19 737 390
- US-A- 5 039 389
- US-A- 5 084 144
- US-A- 6 106 965

## Beschreibung

Die vorliegende Erfindung betrifft eine mit einem Katalysator ausgerüstete Brennstoffzelle nach dem Oberbegriff von Anspruch 1 und deren Verwendung sowie eine mindestens zwei dieser Brennstoffzellen umfassende Brennstoffzellenanordnung. Weiterhin betrifft die vorliegende Erfindung die Verwendung katalysatorbeaufschlagter kornförmiger Partikel, insbesondere auf Basis teilchenförmiger Aktivkohle, in Brennstoffzellen.

Die Gewinnung von elektrischer Energie aus chemischen Energieträgern erfolgt heute zumeist durch Verbrennung in Wärmekraftmaschinen in Verbindung mit Generatoren über den Umweg der thermischen und kinetischen Energie. Brennstoffzellen sind dagegen geeignet, die Umformung ohne Umweg zu erreichen und damit potentiell effizienter zu sein. Dabei unterliegen Brennstoffzellen nicht den Restriktionen des sogenannten Carnot-Prozesses. Weiterhin sind Brennstoffzellen im Vergleich zu Systemen auf Basis von Wärmekraftmaschine/Generator einfacher aufgebaut und können zuverlässiger und abnutzungsfester als letztgenannte ausgebildet sein. Bereits heute werden Brennstoffzellen als Energiewandler in der Raumfahrt (z. B. im Space-Shuttle) und im Bereich des Militärs (z. B. für U-Boot-Antriebe) eingesetzt.

Brennstoffzellen sind galvanische Zellen, welche die chemische Reaktionsenergie eines kontinuierlich zugeführten Brennstoffes und eines Oxidationsmittels in elektrische Energie umwandeln. Brennstoffzellen sind keine Energiespeicher, sondern nur Wandler. Die Energie wird mit den Brennstoffen in einem Tank gespeichert, und zusammen mit einem Brennstoffspeicher können die Brennstoffzellen beispielsweise einen Akkumulator ersetzen, wodurch ein deutlich niedrigeres und günstigeres Leistungsgewicht erreicht werden kann.

Im allgemeinen Sprachgebrauch steht der Begriff der Brennstoffzelle meist für eine Wasserstoff/Sauerstoff-Brennstoffzelle - bisweilen auch als Knallgasbrennstoffzelle bezeichnet -, obwohl eine Vielzahl anderer Brennstoffzellen existieren bzw. bekannt sind.

Brennstoffzellen bezeichnen somit im allgemeinen galvanische Elemente, bei denen durch elektrochemische Oxidation von im allgemeinen leicht zu oxidierenden Substanzen (d. h. Brennstoffen, wie z. B. Wasserstoff, Methanol etc.) mit einem Oxidationsmittel (z. B. Sauerstoff, "elektrochemische Verbrennung") elektrische Energie erzeugt wird.

Das Prinzip der Brennstoffzelle wurde bereits im Jahr 1838 von Christian Friedrich Schönbein entdeckt, indem er zwei Platindrähte in einer Elektrolytlösung mit Wasserstoff bzw. Sauerstoff umspülte und zwischen den Drähten eine Spannung feststellte. Im Jahr 1839 veröffentlichte Schönbein diese Ergebnisse, und im gleichen Jahr schrieb Sir William Grove eine Notiz über das "batterisierte" Knallgas und wandte diese Ergebnisse in Zusammenarbeit mit Schönbein in mehreren Versuchen an. Eine Renaissance erlebte die Brennstoffzelle ab den 1950er Jahren mit dem Beginn der Raumfahrtforschung, und seitdem gewinnt sie kontinuierlich an Bedeutung. Beispielsweise werden auf Island im Zuge der eingeführten Wasserstoffwirtschaft Brennstoffzellen sehr weit verbreitet eingesetzt. Die derzeit leistungsfähigste stationäre Brennstoffzelle ist eine Hochtemperatur-Wasserstoff/Sauerstoff-Brennstoffzelle, welche im Forschungszentrum Jülich, Deutschland, steht.

Wie zuvor beschrieben, wird in Brennstoffzellen - ebenso wie in anderen galvanischen Elementen - elektrische Energie durch Energiedirektumwandlung aus chemischer Energie erzeugt, insbesondere im Fall der Knallgasbrennstoffzelle in Umkehrung der Wasserelektrolyse.

Eine Brennstoffzelle besteht im allgemeinen aus zwei Elektroden, welche beispielsweise durch einen Elektrolyten bzw. Ionenleiter (z. B. eine Membran) voneinander getrennt sind. Die Anode wird dabei im allgemeinen mit dem Brennstoff, z. B. mit Wasserstoff, Methan, Methanol, Glukose etc., umspült, der dort oxidiert wird, wohingegen die Kathode mit dem Oxidationsmittel (z. B. Sauerstoff, Wasserstoffperoxid, Kaliumthiocyanat etc.) umspült wird, das an der Kathode reduziert wird. Die verwendeten Materialien und Edukte sind je nach Brennstoffzellentyp unterschiedlich. Beispielsweise können die Elektrodenplatten bzw. Bipolarplatten aus Metall (z. B. Platin) oder Kohlenstoff bestehen; zu Zwecken des effizienteren Ablaufs der chemischen Prozesse sind sie im allgemeinen mit einem Katalysator beschichtet oder anderweitig beaufschlagt bzw. versehen.

Eine Brennstoffzelle besteht also im allgemeinen aus zwei invarianten Elektroden, zwischen denen sich ein invarianter Elektrolyt befindet, wobei Strom kontinuierlich dadurch geliefert wird, daß die zu oxidierende Substanz (als eigentliche Brennstoffe dienen z. B. Wasserstoff oder Kohlenmonoxid, die z. B. durch Spaltung von Erdgas, Methanol, Hydrazin, Ammoniak etc. gewonnen werden können) und das Oxidationsmittel kontinuierlich zugeführt und die Oxidationsprodukte kontinuierlich abgeführt werden. Man spricht von elektrochemischer Verbrennung, wenn als Oxidationsmittel Sauerstoff (Luft) verwendet wird.

Im Fall der Wasserstoff/Sauerstoff-Brennstoffzelle zerfällt die an den beiden unangreifbaren, inerten bzw. invarianten Elektroden ablaufende Gesamtreaktion

2 H₂ + O₂ → 2 H₂O

in eine Anoden- und Kathodenreaktion: Der an der Kathode adsorbierte Sauerstoff nimmt bei Stromfluß zwei Elektronen je Atom (also vier Elektronen je Molekül) auf (O₂ + 4 e⁻ → 2 O²⁻, kathodische Reduktion). Die zweifach negativ geladenen Sauerstoffionen treten von der Elektrode aus in den mit ihr in Kontakt stehenden Elektrolyten ein (z. B. ein festes Mischoxid oder eine Membran). Gleichzeitig verläßt für jedes in den Elektrolyten eingetretene Sauerstoffion ein anderes diesen an der Anode, wo es mit einem dort adsorbierten Brennstoffmolekül (hier konkret Wasserstoff) unter Abgabe seiner beiden überschüssigen Elektronen unter Bildung von Wasser (2 H₂ + 2 O²⁻ → 2 H₂O + 4 e-, anodische Oxidation) als Verbrennungsprodukt reagiert. Die je verbrauchtes Sauerstoffmolekül freigewordenen vier Elektronen gehen in die äußere Leitung über, die über einen Stromverbraucher zur Kathode führt. Der Stromkreis wird durch den Elektrolyten geschlossen, durch den die Sauerstoffionen fließen. Die Teilreaktionen sind von der Art der Elektrolyten abhängig, d. h. von der Art der Ionen, welche die Elektrizität transportieren. Für weitergehende diesbezügliche Einzelheiten kann beispielsweise auf Römpp Chemielexikon, 10. Auflage, Georg Thieme Verlag, Stuttgart/New York, Band 1, Seiten 514/515, Stichwort: "Brennstoffzellen", sowie die dort referierte Literatur verwiesen werden.

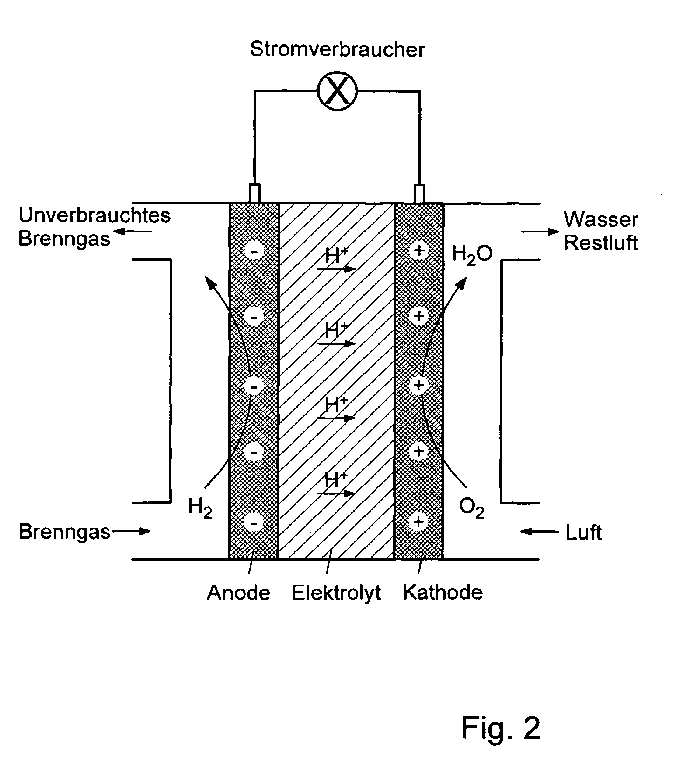

Das Prinzip der Wasserstoff/Sauerstoff-Brennstoffzelle ist schematisiert in Fig. 2 zu der vorliegenden Anmeldung dargestellt: Das Brenngas (Wasserstoff) strömt in den Anodenraum und wird dort an einem Katalysator in Protonen (Wasserstoffionen) und Elektronen zerlegt. Die Protonen (Wasserstoffionen) wandern z. B. durch eine protonenleitende Membran (z. B. sulfonierte PTFE-Membran, wie z. B. Nafion^{®}), welche als Elektrolyt dient, in den Kathodenraum und reagieren an einem Katalysator mit Sauerstoff und Elektronen zu Wasser. Die Elektronen, welche die Membran nicht durchdringen können, fließen von der Anode zur Kathode über einen äußeren Stromkreis, der einen Stromverbraucher (z. B. Motor, Generator etc.) enthält. Das Potential einer einzelnen Brennstoffzelle beträgt etwa 0,7 Volt, und höhere Spannungen erhält man durch Zusammenschalten mehrerer Zellen. Die Wasserstoff/Sauerstoff-Brennstoffzelle ("Knallgaszelle") ist das bekannteste Beispiel für eine Brennstoffzelle; sie gehört zu den Niedertemperaturbrennstoffzellen. Die Gesamtreaktion (2 H₂ + O₂ → 2 H₂O + Energie) entspricht der Knallgasreaktion, welche durch räumliche Trennung von Oxidation des Wasserstoffs und Reduktion des Sauerstoffs in kontrollierter Form stattfindet.

Ebenfalls von Bedeutung sind Methanolbrennstoffzellen, insbesondere Direkt-Methanol-Brennstoffzellen (DMFC), bei denen folgende Gesamtreaktion abläuft, wobei neben Energie bzw. Elektrizität Wasser und Kohlendioxid erzeugt werden:

CH₃OH + H₂O → CO₂ + 6 H⁺ + 6 e- (Anodenreaktion)

3/2 O₂ + 6 H⁺ + 6 e⁻ → 3 H₂O (Kathodenreaktion)

CH₃OH + 3/2 O₂ → CO₂ + 2 H₂O (Gesamtreaktion)

Weiterhin von technischer Bedeutung ist auch die sogenannte Kohlenmonoxid/Sauerstoff-Brennstoffzelle, welche bei katalytischem Vorgang, beispielsweise mit einem Polyoxometallat (POM), wie z. B. H₃PMo₁₂O₄₀, als Katalysator, z. B. bei Raumtemperatur betrieben werden kann, wobei die Brennstoffzellengesamtreaktion nach folgender Gesamtreaktionsgleichung (Wassergas-Shift-Reaktion bzw. WGS) abläuft:

CO + H₂O → CO₂ + H₂

In der nachfolgenden Tabelle sind einige Daten ausgewählter Brennstoffzellen wiedergegeben (vgl. hierzu auch Phys. Unserer Zeit 27, 52-59 (1996*)):*

| **Typ** | **AFC** | **PEMFC** | **PAFC** | **MCFC** | **SOFC** |
|---|---|---|---|---|---|
| Elektrolyt | Lauge | Polymer | Säure | Schmelze | Keramik |
| | KOH 30 % | PTFE sulfon. | H₃PO₄ 95 % | Li₂₋ₓKₓCO₃ | ZrO₂8Y₂O₃ |
| Ion | OH⁻ | H⁺ nH₂O | H⁺ nH₂O | CO₃²⁻ | O²⁻ |
| Matrix | Asbest | keine | PTFE-SiC | PTFE-SiC | keine |
| Temp. [°C] | 0-80 | 0-140 | 60-207 | 600-700 | 850-1050 |
| Brennstoffe | H₂ | H₂, CH₃OH | H₂, [CH₄] | CH₄, CO, H₂ | CH₄, CO, H₂ |
| Anode | Ni, Pt | Pt/Ru/Kohle | Pt/Kohle | Ni-LiCrCO₂ | Ni/ZrO₂ |
| Kathode | Ag | Pt/Kohle | Pt/Kohle | LiFeO₂ | La₁₋ₓSrₓMnO₃ |

| | | | | | |
|---|---|---|---|---|---|
| AFC: Alkalische Brennstoffzelle (Alcaline Fuel Cell) PEMFC: Polymerelektrolytmembran-Brennstoffzelle (Polymer Electrolyte Membrane Fuel Cell) PAFC: Phosphorsäure-Brennstoffzelle (Phosphoric Acid Fuel Cell) MCFC: Schmelzkarbonat-Brennstoffzelle (Molten Carbonate Fuel Cell) SOFC: Oxidkeramische Brennstoffzelle (Solid Oxide Fuel Cell) PTFE: Polytetrafluorethylen | | | | | |

Mit der Verwendung von Brennstoffzellen sind eine Reihe von Vorteilen verbunden: Zum einen sind Brennstoffzellen sehr wartungsarm ausgestaltet, und zum anderen verfügen sie über eine hohe Effizienz, insbesondere führen sie zur Einsparung fossiler Energieträger. Weiterhin sind Brennstoffzellen durch eine niedrige Belastung durch Abgase, insbesondere Stickoxide, gekennzeichnet. Sie verfügen weiterhin über ein gutes Anfahrverhalten und zeigen eine schnelle Reaktion auf Lastwechsel. Durch modulare Bauweise lassen sich die einzelnen Komponenten ohne weiteres austauschen. In der Raumfahrt- und Militärtechnik werden sie bereits erfolgreich eingesetzt.

Brennstoffzellen ermöglichen eine vielfältige Verwendung: So können Brennstoffzellen zur stationären wie mobilen Energie- bzw. Stromgewinnung verwendet werden. Beispielsweise lassen sich Brennstoffzellen zum Antrieb von Straßenfahrzeugen (z. B. PKW), in der Raumfahrt, in Verbindung mit Wasserstoffspeichem (z. B. Metallhydriden) als Kraftwerke oder auch als Sauerstoffsensoren verwenden. Weiterhin eignen sich Brennstoffzellen auch für den portablen Einsatz, insbesondere als Ersatz von Batterien und Akkumulatoren, in kleineren elektrischen Geräten, wie z. B. Computern, Mobilfunktelefonen, Filmkameras etc.

Weiterhin lassen sich Brennstoffzellen in der Raumfahrt- und Militärtechnik einsetzen (z. B. in U-Booten, zur Energiegewinnung in Raumfahrzeugen etc.). Weiterhin eignen sich Brennstoffzellen als Kraftwerke bzw. stationäre Energieversorger beispielsweise für Wohnanlagen oder öffentlichen Gebäude. Auch eignen sie sich in Kleineinheiten zur Strom- und Wärmeversorgung von Haushalten.

Zum ungestörten und effizienten Ablauf der Brennstoffzellenreaktionen ist es erforderlich, die betreffenden Brennstoffzellenreaktionen unter Verwendung geeigneter Katalysatoren zu katalysieren. Die betreffenden Katalysatoren (z. B. Edelmetalle, Nickel wie Raney-Nickel, Wolframcarbide, Molybdän-oder Wolframsulfide, Phthalocyanin- und andere Chelatkomplexe etc.) müssen in zum Teil aufwendigen Verfahren auf die Elektroden der Brennstoffzelle aufgebracht werden, wobei zu diesem Zweck beträchtliche Mengen an Katalysator zum Einsatz kommen müssen und auch die Fixierung an den Elektroden nicht immer einfach realisierbar ist. Zum anderen müssen die eingesetzten Katalysatoren elektrolytresistent, insbesondere alkali- bzw. säurestabilisiert, an den Elektroden fixiert werden, gleichzeitig aber eine möglichst große frei zugängliche Oberfläche aufweisen. Nach dem Stand der Technik erfolgt die Aufbringung des Katalysators im allgemeinen derart, daß der Katalysator auf ein poröses Elektrodenmaterial aufgebracht wird. Nachteilig sind hierbei jedoch die im allgemeinen nur geringe Langzeitstabilität, insbesondere Abnutzungsbeständigkeit, einer derartigen Anordnung sowie die relativ großen Mengen des zu diesem Zweck benötigten Katalysatormaterials.

Es ist daher die Aufgabe der vorliegenden Erfindung, eine Brennstoffzelle mit einem geeigneten Katalysator zu Zwecken der Katalyse der betreffenden Brennstoffzellenreaktion bereitzustellen, welche die zuvor geschilderten Nachteile des Standes der Technik zumindest weitgehend vermeidet oder aber wenigstens abschwächt.

Insbesondere soll im Rahmen der vorliegenden Erfindung eine Brennstoffzelle mit einem Katalysator zu Zwecken der Katalyse der Brennstoffzellenreaktion bereitgestellt werden, welche den Katalysator in effizienter Weise, insbesondere im Hinblick auf die eingesetzte Menge und Langzeitstabilität, verwendet. Die Anmelderin hat nun in überraschender Weise herausgefunden, daß sich das zuvor geschilderte Problem dadurch lösen läßt, daß der betreffende Katalysator für die Brennstoffzelle, welcher die Brennstoffzellenreaktionen katalysieren soll, auf kornförmigen Trägerpartikeln, vorzugsweise auf Aktivkohlebasis, aufgebracht wird und die katalysatorbeladenen Trägerpartikel dann an der betreffenden Elektrode fixiert werden.

Dokument DE 197 37 390 A1 offenbart Gasdiffusionselektroden für Brennstoffzellen, wobei die Elektroden ein Gemisch aus Polyvinylidenfluorid, Kohlenstoff und einem Platinmetall-Elektrokatalysator umfassen. Das Polyvinylidenfluorid dient als Bindemittel. Der Kohlenstoff besteht aus Teilchen und kann beispielsweise Aktivkohle sein mit einer spezifische Oberfläche nach BET-Verfahren von 50-2000 m²/g. Die Teilchengröße der Aktivkohle kann von 5 bis 1000 nm variieren.

Dokument US-A-6 106 965 offenbart eine Brennstoffzelle, welche eine Anode, eine Kathode und ein Polymer-Elektrolyt-Membran aufweist, wobei die Elektroden mit Elektrokatalysatoren ausgestattet sind. Der Katalysator besteht aus Aktivekohlepartikeln, welche mit Platin beladen sind. Die Trägerpartikeln weisen eine mikroporöse Struktur auf, wobei die Mikroporen Porendurchmesser von 10-100 Å aufweisen.

Dokument US-A-5 039 389 offenbart eine Membran-Elektroden-Einheit, welche eine lonenaustauchmembran und Katalysatorpartikeln aufweist. Die Katalysatorpartikel bestehen aus mit Platin beladenen Aktivkohlepartikeln, welche eine spezifische Oberfläche von 800-1800 m²/g und ein Partikeldurchmesser von 10-30 µm aufweisen.

Dokument DE 196 16 160 A1 offenbart einen Katalysator für eine Brennstoffzelle, welcher auf ein feinkörniges Aktivkohlepulver aufgetragen ist. Die Beladung der Aktivkohle mit dem Katalysator erfolgt durch Imprägnierung.

Zur Lösung des zuvor geschilderten Problems schlägt die vorliegende Erfindung somit eine Brennstoffzelle nach Anspruch 1; weitere, vorteilhafte Ausgestaltungen sind Gegenstand der betreffenden Unteransprüche.

Weiterer Gegenstand der vorliegenden Erfindung ist eine Brennstoffzellenanordnung nach Anspruch 14, welche mindestens zwei Brennstoffzellen nach der vorliegenden Erfindung umfaßt.

Wiederum weiterer Gegenstand der vorliegenden Erfindung ist die Verwendung der Brennstoffzelle nach der vorliegenden Erfindung gemäß der Anspruch 15.

Gegenstand der vorliegenden Erfindung - gemäß einem **ersten** Aspekt der vorliegenden Erfindung - ist somit eine Brennstoffzelle, insbesondere elektrochemische Brennstoffzelle, wobei die Brennstoffzelle
- einen ersten Elektrodenraum mit einer ersten Elektrode, insbesondere Anode ("Brennstoffelektrode"),
- einen zweiten Elektrodenraum mit einer zweiten Elektrode, insbesondere Kathode ("Oxidatorelektrode"), und
- einen zwischen dem ersten Elektrodenraum und dem zweiten Elektrodenraum angeordnete, insbesondere den ersten Elektrodenraum von dem zweiten Elektrodenraum trennenden Elektrolyten
aufweist,
wobei mindestens eine der beiden Elektroden (4a, 4b), vorzugsweise beide Elektroden (4a, 4b), mit einem Katalysator, welcher eine betreffende in dem jeweiligen Elektrodenraum (2, 3) ablaufende Brennstoffzellenteilreaktion katalysiert, ausgestattet ist und
wobei der Katalysator auf porösen kernförmigen Trägerpartikeln auf Aktivkohlebasis mit mittleren Partikeldurchmessern im Bereich von 0,05 bis 2,0 mm aufgebracht ist, wobei die katalysatorbeladenden Trägerpartikel (6a, 6b) an der betreffenden Elektrode (4a, 4b) fixiert sind und eine spezifische Oberfläche (BET) von mindestens 500 m²/g sowie ein Gesamtporenvolumen nach Gurvich von mindestens 0,50 cm³/g aufweisen.

Wie zuvor beschrieben, ist die erste Elektrode insbesondere als Anode bzw. "Brennstoffelektrode" ausgebildet; hier findet im allgemeinen die Oxidation statt, insbesondere im Fall einer Wasserstoff/Sauerstoff-Brennstoffzelle die Teilreaktion H₂ → 2 H⁺ + 2 e-, während die zweite Elektrode im allgemeinen als Kathode bzw. "Oxidatorelektrode" ausgebildet ist und hier insbesondere die Reduktion, insbesondere im Fall der Wasserstoff/Sauerstoff-Brennstoffzelle die Teilreaktion ½ O₂ + 2 e- → O²⁻, stattfindet.

Der Katalysator wird im Rahmen der erfindungsgemäßen Brennstoffzelle also derart ausgelegt bzw. ausgewählt, daß er die betreffende in dem jeweiligen Elektrodenraum (d. h. Anodenraum oder Kathodenraum) ablaufende Brennstoffzelleteilreaktion zu katalysieren imstande ist; dies bedeutet, daß speziell im Fall einer Wasserstoff/Sauerstoff-Brennstoffzelle ein geeigneter Katalysator für den Anodenraum die Anodenreaktion (H₂ → 2 H⁺ + 2 e-) zu katalysieren imstande sein muß, während ein geeigneter Katalysator für den Kathodenraum die Kathodenreaktion (½ O₂ + 2 e- → O₂⁻) zu katalysieren imstande sein muß. Die Auswahl des Katalysators an sich ist dem Fachmann aber als solches bekannt, da im Rahmen der vorliegenden Erfindung die Katalysatoren als solche nicht verändert werden, sondern für diese Zwecke an sich bekannte Katalysatoren eingesetzt werden, die dem Fachmann ohne weiteres bekannt sind.

Die Besonderheit der vorliegenden Erfindung muß vielmehr insbesondere darin gesehen werden, daß der betreffende Katalysator auf kornförmigen Trägerpartikeln, vorzugsweise auf Aktivkohlebasis, aufgebracht wird und die auf diese Weise katalysatorbeladenen kornförmigen Trägerpartikel an der betreffenden Elektrode fixiert werden.

Durch diese Maßnahme im Rahmen der vorliegenden Erfindung wird eine Vielzahl von Vorteilen erreicht: Zum einen können auf diese Weise signifikante Mengen an Katalysator eingespart werden, da eine Katalysatorbeladung der Trägerpartikel ohne weiteres, insbesondere ohne Verlust, realisierbar ist und da infolge der großen Oberfläche, insbesondere spezifischen Oberfläche, der kornförmigen Trägerpartikel die Katalysatoren in bzw. auf den katalysatorbeladenen Trägerpartikeln zumindest im wesentlichen frei zugänglich sind, so daß signifikant geringere Mengen an Katalysator als im Fall der direkten Beschichtung der Elektroden mit dem Katalysator verwendet werden müssen. Im Fall der Verwendung kornförmiger Partikel bieten diese zudem den Vorteil, daß sie staubfrei und abriebsfest ausgebildet sind, so daß der Katalysator auch über längere Benutzungszeiträume unverändert und nach wie vor im wesentlichen frei zugänglich erhalten bleibt, so daß eine gute Langzeitstabilität und auch eine gute Abnutzungsbeständigkeit gegeben ist. Im übrigen werden auf diese Weise die Katalysatoren wirksam an die Trägerpartikel gebunden und erreichen somit einen umgebungsstabilen, insbesondere säure- oder basenresistenten, Zustand, so daß sie sich auch in relativ aggressiven Elektrolyten einsetzen lassen. Es war nicht absehbar, daß sich auf diese Weise eine wirksame Katalyse der Brennstoffzellenteilreaktionen erreichen läßt; diese Erkenntnis geht erst auf die Untersuchungen und Studien der Anmelderin zurück.

Durch die Verwendung kornförmiger Trägerpartikel als Träger für die betreffenden Katalysatoren ist die Beladung mit dem Katalysatormaterial völlig von dem eigentlichen Elektrodenmaterial entkoppelt, so daß die Katalysatorbeladung als separater Fertigungsschritt, insbesondere unabhängig von der Elektrodenfertigung, erfolgen kann. Durch nachträgliche Fixierung der katalysatorbeladenen kornförmigen Trägerpartikel an den Elektroden ist gleichermaßen ein Rezyklieren möglich: Wenn beispielsweise die Brennstoffzelle nicht mehr betrieben werden kann, können die katalysatorbeladenen Trägerpartikel vom Elektrodenmaterial entfernt und nach Rezyklierung erneut eingesetzt werden. Im wesentlichen Unterschied zu Trägermaterialien in anderen Erscheinungsformen (z. B. Aktivkohle in Pulverform) bietet die Kornform nicht nur den Vorteil einer besseren Fixierbarkeit an der betreffenden Elektrode sowie den Vorteil der Staubfreiheit, sondern darüber hinaus auch noch den Vorteil einer größeren spezifischen Oberfläche, was zu signifikant geringeren Mengen an benötigtem Katalysator führt.

Im allgemeinen weist die Brennstoffzelle nach der vorliegenden Erfindung außerdem mindestens eine Gaszufuhreinrichtung, insbesondere Gaszufuhrleitung, auf. Üblicherweise umfaßt die Brennstoffzelle nach der vorliegenden Erfindung jeweils mindestens eine dem betreffenden Elektrodenraum (d. h. Anoden- bzw. Kathodenraum) bzw. der betreffenden Elektrode (d. h. Anode bzw. Kathode) zugeordnete Gaszufuhreinrichtung, insbesondere Gaszufuhrleitung.

Im allgemeinen weist die Brennstoffzelle nach der vorliegenden Erfindung mindestens eine dem ersten Elektrodenraum, insbesondere Anodenraum, bzw. der ersten Elektrode, insbesondere Anode ("Brennstoffelektrode"), zugeordnete Gaszufuhreinrichtung auf; diese dient insbesondere zum Zuführen bzw. Umspülen der ersten Elektrode, insbesondere Anode, mit einem Brennstoff. Als Brennstoffe kommen dabei alle hierfür an sich bekannten Brennstoffe in Betracht; beispielsweise kann der Brennstoff aus der Gruppe von Wasserstoff, Kohlenmonoxid, Methanol, Methan sowie deren Mischungen ausgewählt sein, wobei der erfindungsgemäß bevorzugt eingesetzte Brennstoff Wasserstoff ist.

Im allgemeinen weist die Brennstoffzelle nach der vorliegenden Erfindung weiterhin mindestens eine dem zweiten Elektrodenraum, insbesondere Kathodenraum, bzw. der zweiten Elektrode, insbesondere Kathode ("Oxidatorelektrode"), zugeordnete Gaszufuhreinrichtung auf, welche insbesondere zum Zuführen bzw. Umspülen der zweiten Elektrode, insbesondere Kathode, mit einem Oxidationsmittel dient. Das Oxidationsmittel kann dabei aus an sich für diesen Zweck bekannten Oxidationsmitteln ausgewählt sein; beispielsweise kann das Oxidationsmittel aus der Gruppe von Sauerstoff, Wasserstoffperoxid, Kaliumthiocyanat sowie deren Mischungen ausgewählt sein, wobei Sauerstoff das erfindungsgemäß bevorzugt eingesetzte Oxidationsmittel ist.

Was den Elektrolyten anbelangt, so ist dieser üblicherweise zwischen dem ersten Elektrodenraum, insbesondere Anodenraum, und dem zweiten Elektrodenraum, insbesondere Kathodenraum, angeordnet und trennt im allgemeinen die beiden Elektrodenräume (d. h. Anodenraum und Kathodenraum) voneinander. Zu diesem Zweck kommen alle an sich bekannten Elektrolyten in Betracht. Insbesondere ist der erfindungsgemäß eingesetzte Elektrolyt ausgewählt aus trockenen oder wäßrigen, insbesondere basischen oder sauren Elektrolyten oder geeigneten Membranmaterialien, insbesondere ionenleitfähigen und/oder protonenleitfähigen, vorzugsweise protonenleitfähigen Membranen, insbesondere polymeren Elektrolytmembranen, wie vorzugsweise sulfonierten PTFE-Membranen (z. B. Nafion^{®}-Membranen). Entscheidend ist, daß der Elektrolyt ionenleitfähig und/oder protonenleitfähig, insbesondere protonenleitfähig, ausgebildet ist, so daß beispielsweise im Fall einer Wasserstoff/Sauerstoff-Brennstoffzelle die Protonen vom Anodenraum in den Kathodenraum gelangen können. Wie bei Brennstoffzellen üblich, ist der Elektrolyt, insbesondere die Membran, elektronenundurchlässig ausgebildet, so daß die freigewordenen Elektronen in eine äußere Leitung übergehen (vgl. obige Beschreibung der Wasserstoff/Sauerstoff-Brennstoffzelle). Weiterhin ist die Membran im übrigen gasundurchlässig ausgebildet, damit sich die Gase von Anoden- und Kathodenraum nicht durchmischen können.

Im Rahmen der vorliegenden Erfindung wird die Brennstoffzelle im allgemeinen als eine Niedertemperaturbrennstoffzelle betrieben. Insbesondere ist die Brennstoffzelle nach der vorliegenden Erfindung im Temperaturbereich von 0 bis 200 °C, vorzugsweise 0 bis 140 °C, bevorzugt 0 bis 100 °C, ganz besonders bevorzugt 0 bis 80 °C, betreibbar ausgebildet.

Die Brennstoffzelle nach der vorliegenden Erfindung kann als eine Wasserstoff/Sauerstoff-Brennstoffzelle, eine Methanol/Sauerstoff-Brennstoffzelle oder eine WGS-Brennstoffzelle (Wassergas-Shift-Brennstoffzelle) ausgebildet sein. Bevorzugt ist die erfindungsgemäße Brennstoffzelle als eine Wasserstoff/Sauerstoff-Brennstoffzelle ("Knallgas"-Brennstoffzelle) ausgebildet.

Im Rahmen der vorliegenden Erfindung kann die Brennstoffzelle als eine AFC-Brennstoffzelle, PEMFC-Brennstoffzelle, PAFC-Brennstoffzelle oder DMFC-Brennstoffzelle ausgebildet sein.

Was die kornförmigen Trägerpartikel anbelangt, welche mit dem betreffenden Katalysator beladen werden, so erfolgt die Beladung mit dem Katalysator mittels dem Fachmann an sich bekannter Methoden. Beispielsweise kann die Katalysatorbeladung der kornförmigen Partikel mittels Imprägnierungstechniken (z. B. Tränken mit einer Lösung des Katalysators und nachfolgende Trocknung), mittels Plasmabeschichtung oder mittels Aufdampfungsverfahren, insbesondere CVD-Verfahren (Chemical Vapor Deposition), erfolgen. Diese Aufbringungsmethoden sind dem Fachmann als solche bekannt.

Was die Fixierung der katalysatorbeladenen Trägerpartikel an der betreffenden Elektrode anbelangt, so kann diese mittels geeigneter Methoden realisiert werden, insbesondere mittels eines Bindemittels, vorzugsweise mittels eines Klebstoffs, wobei das Bindemittel bzw. der Klebstoff insbesondere temperaturbeständig (d. h. beständig im Bereich der Betriebstemperaturen der Brennstoffzelle) ausgebildet sein sollte. Es versteht sich von selbst, daß das Bindemittel bzw. der Klebstoff auch im Hinblick auf die übrigen Umgebungsbedingungen (z. B. Alkalität bzw. Acidität des Umgebungsmilieus etc.) inert bzw. stabil ausgebildet sein sollte. Üblicherweise wird das Bindemittel bzw. der Klebstoff nur punktförmig auf die betreffende Elektrode aufgetragen, so daß nur geringe Mengen an Bindemittel bzw. Klebstoff aufgewendet werden und der größte Teil der Oberfläche der Elektrode weiterhin für die Reaktion frei zugänglich bleibt. Üblicherweise wird das Bindemittel, insbesondere der Klebstoff, derart aufgetragen, daß die Oberfläche der katalysatorbeladenen Trägerpartikel zu höchstens 50 %, insbesondere zu höchstens 40 %, vorzugsweise zu höchstens 30 % oder weniger, mit dem Bindemittel bzw. Klebstoff bedeckt sind; auf diese Weise wird eine zumindest im wesentlichen freie Zugänglichkeit des Katalysators gewährleistet.

Die Mengen, mit denen der oder die Katalysatoren auf die kornförmigen Trägerpartikel aufgebracht sind, können in weiten Bereichen variieren. Im allgemeinen wird der Katalysator, bezogen auf das Gewicht der kornförmigen Trägerpartikel, in Mengen von 0,0001 bis 30 Gew.-%, insbesondere 0,001 bis 20 Gew.-%, vorzugsweise 0,01 bis 15 Gew.-%, besonders bevorzugt 0,05 bis 10 Gew.-%, auf die kornförmigen Trägerpartikel aufgebracht. Dennoch kann es einzelfallbedingt oder anwendungsbezogen erforderlich sein, von den vorgenannten Werten abzuweichen, ohne daß der Rahmen der vorliegenden Erfindung verlassen ist.

Die Mengen, mit denen die katalysatorbeladenden Trägerpartikel an der betreffende Elektrode fixiert sind, können gleichermaßen in weiten Bereichen variieren. So können die katalysatorbeladenden Trägerpartikel an der betreffenden Elektrode z. B. jeweils in Auflagemengen von 1 bis 750 g/m², insbesondere 5 bis 500 g/m², vorzugsweise 10 bis 400 g/m², bevorzugt 15 bis 300 g/m², besonders bevorzugt 25 bis 250 g/m², fixiert sein. Im allgemeinen ist die Auflagemenge derart ausgelegt, daß die katalysatorbeladenden Trägerpartikel die Oberfläche der betreffenden Elektrode jeweils zu 1 bis 75 %, insbesondere 5 bis 50 %, vorzugsweise 5 bis 45 %, besonders bevorzugt 10 bis 40 %, bedecken, vorzugsweise in gleichmäßiger Verteilung. Dennoch kann es gegebenenfalls einzelfallbedingt oder anwendungsbezogen erforderlich sein, von den vorgenannten Werten abzuweichen, ohne daß der Rahmen der vorliegenden Erfindung verlassen ist.

Im allgemeinen ist die Menge an katalysatorbeladenen Trägerpartikeln vorteilhafterweise derart zu bemessen, daß die katalysatorbeladenen Trägerpartikelan an der betreffenden Elektrode jeweils in solchen Auflagemengen fixiert sind, daß die Auflagemenge an Katalysator auf der betreffenden Elektrode, bezogen auf den reinen (d. h. trägerfreien) Katalysator, jeweils 0,0001 bis 10 g/m², insbesondere 0,001 bis 8 g/m², vorzugsweise 0,01 bis 6 g/m², besonders bevorzugt 0,1 bis 5 g/m², beträgt.

Wie zuvor erwähnt, können im Rahmen der vorliegenden Erfindung alle für diesen Zweck an sich bekannten Katalysatoren zum Einsatz gebracht werden. Beispielsweise kann der Katalysator ein Metall oder eine Metallverbindung oder eine Mischung oder Mischverbindung von mindestens zwei Metallen oder eine Kombination von mindestens zwei Metallverbindungen sein. Insbesondere kann das Katalysatormetall ausgewählt sein aus der Gruppe von Alkali- und Erdalkalimetallen sowie Übergangsmetallen und deren jeweiligen Verbindungen, Mischungen und Mischverbindungen. Beispielsweise können zu diesem Zweck Katalysatoren aus der Gruppe von Platin, Silber, Gold, Palladium, Nickel, Ruthenium, Rhodium, Cer, Molybdän, Wolfram, Eisen, Mangan sowie deren Mischungen und Mischverbindungen eingesetzt werden. Die zu diesem Zweck an sich bekannten Katalysatoren werden selbstverständlich in Abhängigkeit von der Art der Brennstoffzelle und der zu katalysierenden Brennstoffzellen(teil)reaktion(en) ausgewählt. Dieses ist dem Fachmann als solches bekannt.

Die erfindungsgemäß eingesetzten kornförmigen Trägerpartikel sind im allgemeinen porös ausgebildet und weisen Hohlräume, insbesondere Poren, zur Aufnahme des Katalysators auf.

Erfindungsgemäß geeignete kornförmige Trägerpartikel sind beispielsweise ausgewählt aus der Gruppe von Aktivkohlepartikeln; Zeolithpartikeln; anorganischen Oxidpartikeln, insbesondere Siliciumdioxidpartikeln, Silicagelpartikeln und Aluminiumoxidpartikeln; Molekularsiebpartikeln; mineralischen Granulatpartikeln; Klathratpartikeln; sowie deren Mischungen. Erfindungsgemäß besonders bevorzugt sind Aktivkohlepartikel.

Für eine gute Beladbarkeit mit dem Katalysator einerseits und eine gute Fixierbarkeit mit einer Elektrode andererseits sind die kornförmigen Trägerpartikel, insbesondere die Aktivkohlepartikel, vorzugsweise kugelförmig ausgebildet. Im Rahmen der vorliegenden Erfindung üblicherweise eingesetzte kornförmige Trägerpartikel, insbesondere Aktivkohlepartikel, weisen mittlere Partikeldurchmesser im Bereich von 0,01 bis 2,0 mm, insbesondere 0,05 bis 1,0 mm, vorzugsweise 0,1 bis 0,8 mm, auf.

Um eine hohe Beladbarkeit mit Katalysator und eine gute Zugänglich des Katalysators bei Verwendung in der Brennstoffzelle zu gewährleisten, sollten die eingesetzten kornförmigen Trägerpartikel, insbesondere Aktivkohlepartikel, eine möglichst große spezifische Oberfläche (BET) aufweisen. Üblicherweise weisen die kornförmigen Trägerpartikel, insbesondere die Aktivkohlepartikel, eine spezifische Oberfläche (BET) von mindestens 500 m²/g, insbesondere mindestens 750 m²/g, vorzugsweise mindestens 1.000 m²/g, besonders bevorzugt mindestens 1.200 m²/g, auf. Üblicherweise weisen die kornförmigen Trägerpartikel, insbesondere die Aktivkohlepartikel, eine spezifische Oberfläche (BET) von 500 bis 2.500 m²/g, insbesondere 750 bis 2.250 m²/g, vorzugsweise 900 bis 2.000 m²/g, besonders bevorzugt 1.000 bis 1.750 m²/g, auf. Die Anmelderin hat überraschenderweise herausgefunden, daß sich die Beladbarkeit mit Katalysator mit steigender BET-Oberfläche verbessert und die für die Brennstoffzelle benötigte Katalysatormenge mit steigender BET-Oberfläche abnimmt; nach Studien der Anmelderin führt eine BET-Oberfläche von 500 m²/g im Vergleich zu ungeträgerten Systemen und zu herkömmlich geträgerten Systemen des Standes der Technik zu einer Katalysatoreinsparung von mindestens etwa 5 % bis 10 % und eine BET-Oberfläche von 1.000 m²/g zu einer Katalysatoreinsparung von bereits mindestens etwa 15 % bis 20 %. Alle vorgenannten BET-Oberflächenangaben beziehen sich auf die Bestimmung gemäß ASTM D6556-04 (Im Rahmen der vorliegenden Erfindung wird zur Bestimmung der BET-Oberfläche die sogenannte Multi-Point-BET-Bestimmungsmethode (MP-BET) in einem Partialdruckbereich p/p₀ von 0,05 bis 0,1 angewendet.). In bezug auf weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auf lage), Band 7, Seiten 93 ff. sowie auf Z. Anal. Chem. 238, Seiten 187 bis 193 (1968) verwiesen werden.

In vorteilhafter Weise weisen die kornförmigen Trägerpartikel, insbesondere die Aktivkohlepartikel, ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, auf. In besonders vorteilhafter Weise weisen die kornförmigen Trägerpartikel, insbesondere die Aktivkohlepartikel, ein Gesamtporenvolumen nach Gurvich im Bereich von 0,5 bis 3,5 cm³/g, insbesondere 0,55 bis 3,5 cm³/g, vorzugsweise 0,60 bis 3,4 cm³/g, besonders bevorzugt 0,65 bis 3,3 cm³/g, ganz besonders bevorzugt 0,70 bis 3,2 cm³/g, auf. Wie die Anmelderin überraschenderweise herausgefunden hat, verbessert sich die Beladbarkeit mit Katalysator mit steigendem Gesamtporenvolumen und nimmt die für die Brennstoffzelle benötigte Katalysatormenge mit steigendem Gesamtporenvolumen ab; nach Studien der Anmelderin führt ein Gesamtporenvolumen nach Gurvich von mindestens 0,50 cm³/g im Vergleich zu ungeträgerten Systemen und zu herkömmlich geträgerten Systemen des Standes der Technik zu einer Katalysatoreinsparung von mindestens etwa 5 % bis 10 % und ein Gesamtporenvolumen nach Gurvich von mindestens 0,60 cm³/g zu einer Katalysatoreinsparung von bereits mindestens etwa 10 % bis 20 %. Was die Bestimmung des Gesamtporenvolumens nach Gurvich anbelangt, so handelt es sich um eine dem Fachmann an sich bekannte Meß- bzw. Bestimmungsmethode; zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf *S. Lowell et al*., Characterization of Porous Solids and Powders: Surface Area Pore Size and Density, Kluwer Academic Publishers, Article Technology Series, Seiten 111 ff.

Erfindungsgemäß besonders geeignete kornförmige Trägerpartikel, insbesondere Aktivkohlepartikel, weisen ein gewichtsbezogenes Stickstoffsdsorptionsvolumen V_{ads} (p/p₀ = 0,995) von mindestens 250 cm³/g, insbesondere mindestens 300 cm³/g, vorzugsweise mindestens 350 cm³/g, besonders bevorzugt mindestens 400 cm³/g, auf. Besonders bevorzugt ist es, wenn die kornförmigen Trägerpartikel, insbesondere die Aktivkohlepartikel, ein gewichtsbezogenes Stickstoffsdsorptionsvolumen V_{ads} (p/p₀ = 0,995) von 250 bis 2.200 cm³/g, insbesondere 300 bis 2.000 cm³/g, vorzugsweise 350 bis 2.000 cm³/g, aufweisen.

Wie zuvor beschrieben, sind die erfindungsgemäß eingesetzten kornförmigen Trägerpartikel, insbesondere die Aktivkohlepartikel, staubfrei und/oder abriebsfest, vorzugsweise staubfrei und abriebsfest, ausgebildet. Vorteilhafterweise weisen die kornförmigen Trägerpartikel, insbesondere die Aktivkohlepartikel, einen Berstdruck von mindestens 5 Newton, insbesondere einen Berstdruck im Bereich von 5 Newton bis 20 Newton, pro Partikel auf.

Erfindungsgemäß als kornförmige Trägerpartikel geeignete Materialien, insbesondere Aktivkohlepartikel, sind kommerziell verfügbar und beispielsweise über die Blücher GmbH, Erkrath, Deutschland, oder die Adsor-Tech GmbH, Premnitz, Deutschland, erhältlich.

Gemäß einer besonderen Ausführungsform der vorliegenden Erfindung werden als kornförmige Trägerpartikel für den Katalysator Aktivkohlepartikel hoher Mikroporosität eingesetzt, wie sie in der deutschen Gebrauchsmusteranmeldung DE 20 2006 016 898.2 vom 4. November 2006 beschrieben sind und kommerziell verfügbar sind (z. B. über die Firmen Blücher GmbH oder Adsor-Tech GmbH). Diese Aktivkohlepartikel zeichnen sich durch eine besonders große Mikroporosität bei gleichzeitig großer Gesamtporosität aus. Die zuvor beschriebenen Aktivkohlepartikel hoher Mikroporosität, welche vorzugsweise in Kugelform vorliegen, sind insbesondere durch ein Gesamtporenvolumen nach Gurvich von mindestens 0,7 cm³/g, wobei mindestens 70 % dieses Gesamtporenvolumens durch Mikroporenporen mit Porendurchmessern von ≤ 20 Å gebildet sind, und einen mittleren Porendurchmesser von höchstens 30 Å sowie eine BET-Oberfläche von mindestens 1.500 m²/g gekennzeichnet. Das Gesamtporenvolumen nach Gurvich dieser Aktivkohlepartikel hoher Mikroporosität beträgt mindestens 0,7 cm³/g, insbesondere mindestens 0,8 cm³/g, vorzugsweise mindestens 0,9 cm³/g, besonders bevorzugt mindestens 1,0 cm³/g, und kann Werte bis zu 1,5 cm³/g, insbesondere bis zu 1,6 cm³/g, vorzugsweise bis zu 1,8 cm³/g, erreichen. Im allgemeinen sind mindestens 70 %, insbesondere mindestens 75 %, vorzugsweise mindestens 80 %, besonders bevorzugt mindestens 85 %, ganz besonders bevorzugt mindestens 90 %, des Gesamtporenvolumens nach Gurvich dieser Aktivkohlepartikel hoher Mikroporosität durch Mikroporen mit Porendurchmessern von ≤ 20 Å gebildet; vorzugsweise sind 70 % bis 95 %, insbesondere 75 bis 90 %, vorzugsweise 75 bis 85 %, des Gesamtporenvolumens nach Gurvich dieser Aktivkohlepartikel hoher Mikroporosität durch Mikroporen mit Porendurchmessern von ≤ 20 Å gebildet. Im Rahmen der vorliegenden Erfindung bezeichnet der Begriff der Mikroporen solche Poren mit Porendurchmessern bis zu 20 Å einschließlich, wohingegen der Begriff der Mesoporen solche Poren mit Porendurchmessern von > 20 Å bis 50 Å einschließlich bezeichnet und der Begriff der Makroporen solche Poren mit Porendurchmessern > 50 Å bezeichnet. Der mittlere Teilchendurchmesser dieser Aktivkohlepartikel hoher Mikroporosität, bestimmt nach ASTM D2862-97/04, liegt im Bereich von 0,01 bis 1,0 mm, , insbesondere 0,1 bis 0,8 mm, vorzugsweise 0,2 bis 0,7 mm, besonders bevorzugt 0,4 bis 0,55 mm.

Gemäß einer alternativen besonderen Ausführungsform der vorliegenden Erfindung kommen als kornförmige Trägerpartikel für den Katalysator Aktivkohlepartikel mit hoher Meso- und Makroporosität zum Einsatz, wie sie in der deutschen Patentanmeldung DE 20 2007 012 963.9 vom 14. März 2007 bzw. deren Patentfamilienmitgliedern beschrieben ist und kommerziell erhältlich ist (z. B. über die Firmen Blücher GmbH und Adsor-Tech GmbH). Diese Aktivkohlepartikel zeichnen sich durch eine hohe Meso- und Makroporosität bei gleichzeitig relativ hoher Mikroporosität und bei gleichzeitig großer Gesamtporosität aus. Die zuvor beschriebenen Aktivkohlepartikel hoher Meso-und Makroporosität, welche vorzugsweise in Kugelform vorliegen, sind insbesondere durch einen Anteil an durch Poren mit Porendurchmessern von mehr als 20 Å gebildetem Porenvolumen (d. h. mit anderen Worten einen Anteil an Meso- und Makroporenvolumen) von mindestens 55 % des Gesamtporenvolumens und einen mittleren Porendurchmesser von mehr als 25 Å sowie eine BET-Oberfläche von mindestens 1.250 m²/g gekennzeichnet. Im allgemeinen beträgt das Gesamtporenvolumen nach Gurvich dieser Aktivkohlepartikel hoher Meso- und Makroporosität mindestens 0,8 cm³/g, insbesondere mindestens 1,0 cm³/g, vorzugsweise mindestens 1,2 cm³/g, und kann im allgemeinen Werte von bis zu 2,0 cm³/g, insbesondere bis zu 2,5 cm³/g, vorzugsweise bis zu 3,0 cm³/g, besonders bevorzugt bis zu 3,5 cm³/g, erreichen. Im allgemeinen sind mindestens 60 %, insbesondere mindestens 65 %, vorzugsweise mindestens 70 %, besonders bevorzugt mindestens 75 %, ganz besonders bevorzugt mindestens 80 % des Gesamtporenvolumens dieser Aktivkohlepartikel hoher Meso- und Makroporosität durch das Porenvolumen von Poren mit Porendurchmessern von mehr als 20 Å (d. h. also mit anderen Worten durch das Meso- und Makroporenvolumen) gebildet; vorzugsweise sind 55 % bis 95 %, insbesondere 60 % bis 95 %, vorzugsweise 65 % bis 90 %, besonders bevorzugt 70 bis 85 %, des Gesamtporenvolumens dieser Aktivkohlepartikel hoher Meso- und Makroporosität durch das Porenvolumen von Poren mit Porendurchmessern von mehr als 20 Å gebildet; die vorgenannten Prozentangaben bezeichnen somit den Anteil des sogenannten äußeren Porenvolumens (d. h. des durch Poren mit Porendurchmessern von mehr als 20 Å gebildeten Porenvolumens) am Gesamtporenvolumen dieser Aktivkohlepartikel hoher Meso- und Makroporosität. Im allgemeinen beträgt der mittlere Porendurchmesser dieser Aktivkohlepartikel hoher Meso- und Makroporosität mindestens 30 Å, insbesondere mindestens 35 Å, bevorzugt mindestens 40 Å, und liegt vorzugsweise im Bereich von 25 bis 75 Å, insbesondere 30 bis 75 Å, vorzugsweise 35 bis 70 Å, besonders bevorzugt 40 bis 65 Å. Der mittlere Teilchendurchmesser, bestimmt nach ASTM D2862-97/04, dieser Aktivkohlepartikel hoher Meso- und Makroporosität liegt im allgemeinen im Bereich von 0,01 bis 2,0 mm, insbesondere 0,01 bis 1,0 mm, vorzugsweise 0,05 bis 0,9 mm, besonders bevorzugt 0,1 bis 0,8 mm, ganz besonders bevorzugt 0,15 bis 0,7 mm.

Weiterer Gegenstand nach der vorliegenden Erfindung - gemäß einem **zweiten** Aspekt der vorliegenden Erfindung - ist eine Brennstoffzellenanordnung, welche mindestens zwei Brennstoffzellen nach der vorliegenden Erfindung, wie zuvor beschrieben, umfaßt. Beispielsweise können die Brennstoffzellen der erfindungsgemäßen Brennstoffzellenanordnung in Serie geschaltet und/oder zu einem Brennstoffzellenstapel (Brennstoffzellenstack) zusammengeführt sein. Solche Brennstoffzellenanordnungen sind dem Fachmann an sich bekannt, so daß es diesbezüglich keiner weitergehenden Ausführungen bedarf. Auf diese Weise läßt sich durch das Zusammenschalten von mindestens zwei Brennstoffzellen nach der vorliegenden Erfindung eine Steigerung in der Energiegewinnung erreichen.

Wie eingangs geschildert, ermöglichen Brennstoffzellen eine vielfältige Verwendung. Weiterer Gegenstand der vorliegenden Erfindung - gemäß einem **dritten** Aspekt der vorliegenden Erfindung - ist somit die Verwendung einer Brennstoffzelle nach der vorliegenden Erfindung, wie sie in den betreffenden Verwendungsansprüchen wiedergegeben ist.

So läßt sich die erfindungsgemäße Brennstoffzelle beispielsweise zu Zwecken der Energiegewinnung, insbesondere Stromerzeugung, vorzugsweise zur stationären oder mobilen, insbesondere portablen, Energiegewinnung einsetzen.

Beispielsweise kann die erfindungsgemäße Brennstoffzelle zu Zwecken der Energiegewinnung, insbesondere zum Antrieb von Straßenfahrzeugen, insbesondere PKW, LKW und Bussen, Nutzfahrzeugen, Schienenfahrzeugen, in der Schiffahrt sowie in der Luft- und Raumfahrt eingesetzt werden. Weiterhin läßt sich die erfindungsgemäße Brennstoffzelle in der Raumfahrt- und Militärtechnik einsetzen (z. B. zum Antrieb von Raketen, U-Booten etc.).

Weiterhin eignet sich die erfindungsgemäße Brennstoffzelle zur Verwendung in oder als Kraftwerk, insbesondere zur stationären Energieversorgung von Haushalten, Wohnanlagen oder Gebäuden, insbesondere zur Strom- und/oder Wärmeversorgung.

Des weiteren ermöglicht die erfindungsgemäße Brennstoffzelle die Verwendung als portable und/oder mobile Energiequelle, insbesondere in elektrischen Geräten, wie Computern, Mobilfunktelefonen, Filmkameras, Haushaltsgeräten oder dergleichen.

Weitere vorteilhafte Eigenschaften, Aspekte und Merkmale der vorliegenden Erfindung ergeben sich aus der folgenden Beschreibung eines in den Figuren dargestellten Ausführungsbeispiels. Es zeigt:
- Fig. 1: eine schematische Darstellung einer erfindungsgemäßen Brennstoff- zelle gemäß einer Ausführungsform der vorliegenden Erfindung;
- Fig. 2: eine schematische Darstellung einer Wasserstoff/Sauerstoff-Brenn- stoffzelle ("Knallgas"-Brennstoffzelle).

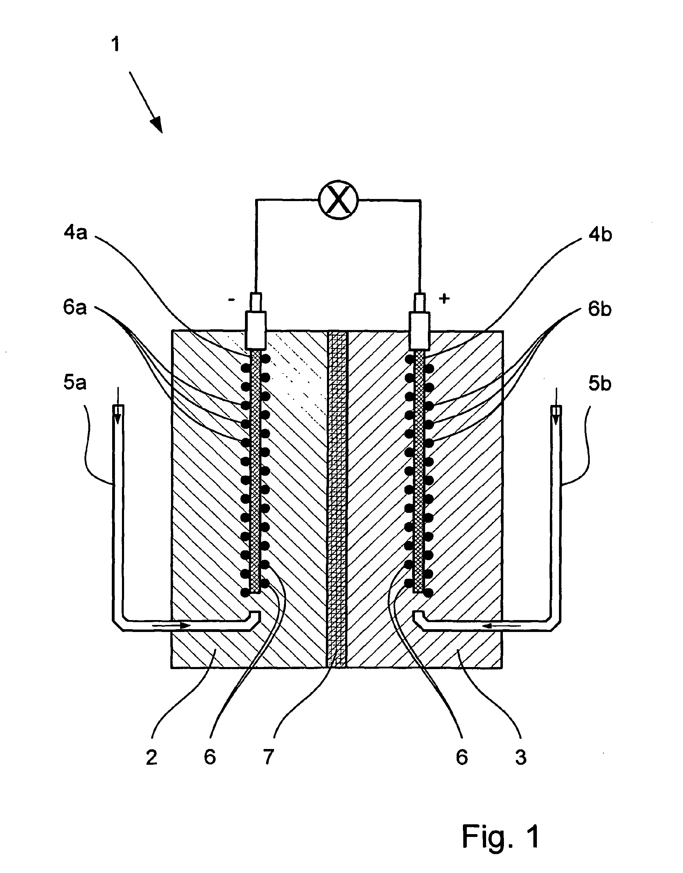

Wie sich aus Fig. 1 ergibt, weist eine Brennstoffzelle 1 nach der vorliegenden Erfindung, insbesondere elektrochemische Brennstoffzelle, einen ersten Elektrodenraum 2 ("Anodenraum" bzw. "Brennstoffraum") mit einer ersten Elektrode 4a, insbesondere Anode ("Brennstoffelektrode"), einen zweiten Elektrodenraum 3 ("Kathodenraum") mit einer zweiten Elektrode 4b, insbesondere Kathode ("Oxidatorelektrode"), und einen zwischen dem ersten Elektrodenraum 2 und dem zweiten Elektrodenraum 3 angeordnete, insbesondere den ersten Elektrodenraum 2 von dem zweiten Elektrodenraum 3 trennenden Elektrolyten 7 auf. Dabei ist mindestens einer der beiden Elektroden 4a, 4b, vorzugsweise beide Elektroden 4a, 4b, mit einem Katalysator ausgestattet, welche die betreffende in dem jeweiligen Elektrodenraum 2, 3 ablaufende Brennstoffzellenteilreaktion katalysiert. Im Rahmen der vorliegenden Erfindung ist der Katalysator auf kornförmigen Trägerpartikeln, insbesondere auf Aktivkohlebasis, aufgebracht, wobei die katalysatorbeladenen Trägerpartikel 6a, 6b an der betreffenden Elektrode 4a, 4b fixiert sind.

Wie Fig. 1 zeigt, kann die erfindungsgemäße Brennstoffzelle 1 außerdem mindestens eine Gaszufuhreinrichtung 5a, 5b, insbesondere Gaszufuhrleitung, umfassen; dabei umfaßt die Brennstoffzelle 1 vorteilhafterweise jeweils mindestens eine dem betreffenden Elektrodenraum 2, 3 bzw. der betreffenden Elektrode 4a, 4b zugeordnete Gaszufuhreinrichtung 5a, 5b, insbesondere Gaszufuhrleitung.

Üblicherweise weist die Brennstoffzelle 1 mindestens eine dem ersten Elektrodenraum 2 bzw. der ersten Elektrode 4a, insbesondere Anode ("Brennstoffelektrode"), zugeordnete Gaszufuhreinrichtung 5a auf, welche insbesondere zum Zuführen bzw. Umspülen der ersten Elektrode 4a, insbesondere Anode, mit einem Brennstoff dient, wobei der Brennstoff üblicherweise aus der Gruppe von Wasserstoff, Kohlenmonoxid, Methanol, Methan sowie deren Mischungen ausgewählt ist, wobei Wasserstoff bevorzugt ist.

Weiterhin weist die Brennstoffzelle 1 mindestens eine dem zweiten Elektrodenraum 3 bzw. der zweiten Elektrode 4b, insbesondere Kathode ("Oxidator"), zugeordnete Gaszufuhreinrichtung 5b auf, insbesondere zum Zuführen bzw. Umspülen der zweiten Elektrode 4b, insbesondere Kathode, mit einem Oxidationsmittel, wobei das Oxidationsmittel üblicherweise aus der Gruppe von Sauerstoff, Wasserstoffperoxid, Kaliumthiocyanat sowie deren Mischungen ausgewählt ist, wobei Sauerstoff bevorzugt ist.

Wie Fig. 1 weiterhin zeigt, weist die erfindungsgemäße Brennstoffzelle außerdem einen Elektrolyten 7 auf, welcher üblicherweise ionenleitfähig und/oder protonenleitfähig, vorzugsweise protonenleitfähig, ausgebildet ist, wobei es sich bei dem Elektrolyten um einen trockenen oder wäßrigen, insbesondere basischen oder sauren Elektrolyten oder aber insbesondere um eine ionenleitfähige und/oder protonenleitfähige, insbesondere protonenleitfähige, Membran, vorzugsweise polymere Elektrolytmembran (z. B. auf Basis von sulfoniertem PTFE, wie z. B. Nafion^{®}), handeln kann.

Für weitergehende Einzelheiten zu der in Fig. 1 dargestellten Ausführungsform der vorliegenden Erfindung kann zur Vermeidung unnötiger Wiederholungen auf die obigen allgemeinen Ausführungen zu der vorliegenden Erfindung verwiesen werden, welche in bezug auf die spezielle Ausführungsform gemäß Fig. 1 entsprechend gelten.

In erfindungsgemäß bevorzugter Weise ist die erfindungsgemäße Brennstoffzelle als eine sogenannte "Knallgas"-Brennstoffzelle, d. h. eine Wasserstoff/- Sauerstoff-Brennstoffzelle, ausgebildet, deren schematischer Ablauf in Fig. 2 dargestellt ist und im einleitenden Teil zu der vorliegenden Erfindung eingehend beschrieben worden ist: Zunächst wird Wasserstoff einer Elektrode (Anode) zugeführt, welche mit einem Katalysator, insbesondere Platin, versehen ist, wobei der Wasserstoff mit Hilfe des Katalysators in einzelne Atome aufgespalten und nachfolgend unter Abgabe je eines Elektrons zu Protonen ionisiert wird. Die Anode steht in Kontakt mit einer gasdichten protonenleitenden Membran, welche die Gase Wasserstoff im Anodenraum und Sauerstoff im Kathodenraum voneinander trennt und gleichzeitig als Elektrolyt dient, so daß gewährleistet ist, daß der bei der chemischen Reaktion stattfindende Elektronenaustausch nicht innerhalb der Zelle, sondern über ein äußeren Stromkreis stattfindet. Die an der Anode entstandenen Protonen können den Elektrolyten passieren, wobei an der Anode negativ geladene Elektronen zurückbleiben. An der Kathode werden Sauerstoffmoleküle durch den dort vorhandenen Katalysator gespalten und unter Abgabe von je zwei Elektronen zu zweifach negativ geladenen Sauerstoffionen überführt. Diese Sauerstoffionen reagieren mit den Wasserstoffionen an der Kathode zu Wasser. Damit die Oxidation ablaufen kann, werden jedoch die Elektronen benötigt, die zuvor an der Anode abgegeben worden sind. Verbindet man nun die beiden Elektroden mit einem elektrischen Leiter, so wandern durch diesen elektrischen Leiter die Elektronen von der Anode zur Kathode, so daß eine elektrische Spannung entsteht, die beispielsweise einen Verbraucher, wie z. B. einen Elektromotor, antreiben kann. Neben der Stromerzeugung wird durch die exotherme Reaktion in der Zelle auch Wärme freigesetzt.

Im Rahmen der vorliegenden Erfindung lassen sich Brennstoffzellen ohne weiteres und in effizienter Weise mit einem Katalysator ausstatten. Die mit der vorliegenden Erfindung einhergehenden Vorteile sind bereits eingangs geschildert worden, so daß diesbezüglich auf die vorstehenden Ausführungen verwiesen werden kann.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird nachfolgend anhand von Ausführungsbeispielen veranschaulicht, welche die vorliegende Erfindung jedoch keinesfalls beschränken.

### AUSFÜHRUNGSBEISPIELE:

In an sich bekannter Weise und in Übereinstimmung mit den Figurendarstellungen gemäß Fig. 1 und 2 wird eine Wasserstoff/Sauerstoff-Brennstoffzelle in Form einer PEM-Brennstoffzelle konzipiert. Als Elektrolyt dient eine ca. 100 µm dicke, folienartige, gasundurchlässige protonenleitende Nafion^{®}-Membran (sulfonierte PTFE-Membran), welche auf beiden Seiten mit jeweils einer Elektrode versehen wird, wobei die im Betriebszustand mit Wasserstoff umspülte Elektrode als Anode und die im Betriebszustand mit Sauerstoff umspülte Elektrode als Kathode fungiert, wobei beide Elektroden mit einem Katalysator beaufschlagt sind (Platin im Fall der Kathode und Platin/Ruthenium im Fall der Anode). Die Brennstoffzelle wird bei ca. 80 °C betrieben.

Als erster Vergleich (Beispiele 1A, 1Bund 1C) dienen drei Brennstoffzellen der vorgenannten Art mit unterschiedlichen Auflagemengen an Katalysatoren der vorgenannten Art (1A: 5,0 g/m²; 1B: 4,0 g/m²; 1C: 3,5 g/m²; Auflagemengen jeweils auf den reinen Katalysator und jeweils auf eine Elektrode bezogen), wobei im Rahmen der Beispiele 1A bis 1C die Katalysatoren in Reinform eingesetzt werden. Während im Fall von Beispiels 1A ein Potential von etwa 0,7 V gemessen wird, beträgt das gemessene Potential bei Beispiel 1B nur etwa 0,5 V und bricht im Fall von Beispiel 1C gänzlich zusammen.

Als zweiter Vergleich (Beispiele 2A, 2B, 2C und 2D) dienen vier Brennstoffzellen der vorgenannten Art mit unterschiedlichen Auflagemengen an Katalysatoren der vorgenannten Art (2A: 5,0 g/m²; 2B:4,0 g/m²; 2C: 3,5 g/m²; 2D: 3,0 g/m²; Auflagemengen jeweils auf den reinen Katalysator und jeweils auf eine Elektrode bezogen), wobei im Rahmen der Beispiele 2A bis 2D die Katalysatoren auf Aktivkohlepulver (BET: ca. 200 m²/g; Gesamtporenvolumen nach Gurvich: ca. 0,2 cm³/g) eingesetzt werden. Während im Fall von Beispiel 2A ein Potential von etwa 0,7 V gemessen wird, beträgt das gemessene Potential bei Beispiel 2B nur etwa 0,6 V und bei Beispiel 2C nur etwa 0,4 V, um schließlich bei Beispiel 2D gänzlich zusammenzubrechen.

Als erstes erfindungsgemäßes Beispiel (Beispiele 3A, 3B, 3C und 3D) dienen vier Brennstoffzellen der vorgenannten Art mit unterschiedlichen Auflagemengen an Katalysatoren der vorgenannten Art (3A: 5,0 g/m²; 3B: 4,0 g/m²; 3C: 3,5 g/m²; 3D: 3,0 g/m²; Auflagemengen jeweils auf den reinen Katalysator und jeweils auf eine Elektrode bezogen), wobei im Rahmen der Beispiele 3A bis 3D die Katalysatoren auf kugelförmigen Aktivkohlepartikel (Fa. Adsor-Tech GmbH, Premnitz; BET: ca. 600 m²/g; Gesamtporenvolumen nach Gurvich: ca. 0,6 cm³/g; mittlerer Durchmesser: ca. 0,8 mm) eingesetzt werden, welche mittels eines punktförmig aufgetragenen temperaturbeständigen Reaktivklebstoffs an den Elektroden fixiert sind (Die Katalysatorbeladung erfolgt im herkömmlichen Imprägnierverfahren.). In allen vier Beispielen beträgt das gemessene Potential unverändert etwa 0,7 V.

Die erfindungsgemäßen Beispiele 3A bis 3D werden wiederholt, jedoch mit der Abweichung, daß als Träger eine andere kugelförmige Aktivkohle (gleichermaßen Fa. Adsor-Tech GmbH, Premnitz; BET: ca. 1.000 m²/g; Gesamtporenvolumen nach Gurvich: ca. 0,70 cm³/g; mittlerer Durchmesser: ca. 0,8 mm) eingesetzt wird und die Katalysatormengen variiert werden (4A: 4,5 g/m²; 4B: 4,0 g/m²; 4C: 3,0 g/m²; 3D: 2,5 g/m² Auflagemengen jeweils auf den reinen Katalysator und jeweils auf eine Elektrode bezogen; Katalysatorbeladung im herkömmlichen Aufdampfverfahren). In den drei Beispielen 4A bis 4C beträgt das gemessene Potential unverändert etwa 0,7 V, und lediglich im Fall von Beispiel 4D sinkt es geringfügig auf etwa 0,65 V.

Die vorstehenden Beispiele belegen eindrucksvoll, daß sich mit der erfindungsgemäßen Technologie, insbesondere unter Verwendung kornförmiger Träger mit hohen spezifischen BET-Oberflächen und hoher Porosität, signifikante Katalysatormengen beim Betreiben von Brennstoffzellen einsparen lassen, ohne daß deren Effizienz hierdurch beeinträchtigt wird.

## Patentansprüche

1. Brennstoffzelle (1), insbesondere elektrochemische Brennstoffzelle, wobei die Brennstoffzelle (1)
- einen ersten Elektrodenraum (2) mit einer ersten Elektrode (4a), insbesondere Anode ("Brennstoffelektrode"),
- einen zweiten Elektrodenraurn (3) mit einer zweiten Elektrode (4b), insbesondere Kathode ("Oxidatorelektrode"), und
- einen zwischen dem ersten Elektrodenraum (2) und dem zweiten Elektrodenraum (3) angeordnete, insbesondere den ersten Elektrodenraum (2) von dem zweiten Elektrodenraum (3) trennenden Elektrolyten (7) aufweist,
wobei mindestens eine der beiden Elektroden (4a, 4b), vorzugsweise beide Elektroden (4a, 4b), mit einem Katalysator, welcher eine betreffende in dem jeweiligen Elektrodenraum (2, 3) ablaufende Brennstoffzellenteilreaktion katalysiert, ausgestattet ist und
wobei der Katalysator auf porösen kornförmigen Trägerpartikeln auf Aktivkohlebasis mit mittleren Partikeldurchmessern im Bereich von 0,05 bis 2,0 mm aufgebracht ist, wobei die katalysatorbeladenden Trägerpartikel (6a, 6b) an der betreffenden Elektrode (4a, 4b) fixiert sind und eine spezifische Oberfläche (BET) von mindestens 500 m²/g sowie ein Gesamtporenvolumen nach Gurvich von mindestens 0,50 cm³/g aufweisen.

2. Brennstoffzelle nach Anspruch 1, **dadurch gekennzeichnet, daß** die Brennstoffzelle (1) mindestens eine dem ersten Elektrodenraum (2) und/oder der ersten Elektrode (4a), insbesondere Anode ("Brennstoffelektrode"), zugeordnete Gaszufuhreinrichtung (5a) umfaßt und/oder daß die Brennstoffzelle (1) mindestens eine dem zweiten Elektrodenraum (3) und/oder der zweiten Elektrode (4b), insbesondere Kathode ("Oxidatorelektrode"), zugeordnete Gaszufuhreinrichtung (5b) umfaßt.

3. Brennstoffzelle nach Anspruch 1 oder 2, **dadurch gekennzeichnet, daß** der Elektrolyt (7) ionenleitfähig und/oder protonenleitfähig ausgebildet ist, insbesondere wobei der Elektrolyt (7) ausgewählt ist aus trockenen oder wäßrigen, insbesondere basischen oder sauren Elektrolyten und insbesondere ionenleitfähigen und/oder protonenleitfähigen Membranen, insbesondere polymeren Elektrolytmembranen, wie vorzugsweise sulfonierten PTFE-Membranen, insbesondere wobei die Membranen gasundurchlässig und/oder nichtelektronenleitend ausgebildet sind.

4. Brennstoffzelle nach einem oder mehreren der vorangehenden Ansprüche, **dadurch gekennzeichnet, daß** die Brennstoffzelle (1) eine Niedertemperatarbrennstoffzelle ist, insbesondere wobei die Brennstoffzelle im Temperaturbereich von 0 bis 200 °C, vorzugsweise 0 bis 140 °C, bevorzugt 0 bis 100 °C, ganz besonders bevorzugt 0 bis 80 °C, betreibbar ist.

5. Brennstoffzelle nach einem der vorangehenden Ansprüche, **dadurch gekennzeichnet, daß** die Beladung der kernförmigen Trägerpartikel mit dem Katalysator mittels Imprägnierung, Plasmabeschichtung oder Aufdampfungsverfahren, insbesondere CVD-Verfahren (Chemical Vapor Deposition), erfolgt ist.

6. Brennstoffzelle nach einem der vorangehenden Ansprüche, **dadurch gekennzeichnet, daß** die Fixierung der katalysatorbeladenen Trägerpartikel (6a, 6b) an der betreffenden Elektrode (4a, 4b) mittels eines Bindemittels, insbesondere mittels eines vorzugsweise temperaturbeständigen Klebstoff, erfolgt ist, insbesondere wobei das Bindemittel punktförmig auf die betreffende Elektrode (4a, 4b) aufgetragen ist und/oder insbesondere wobei das Bindemittel die Oberfläche der katalysatorbeladenen Trägerpartikel (6a, 6b) zu höchstens 50 %, insbesondere zu höchstens 40 %, vorzugsweise zu höchstens 30 % oder weniger, bedeckt.

7. Brennstoffzelle nach einem der vorangehenden Ansprüche, **dadurch gekennzeichnet, daß** der Katalysator in Mengen von 0,0001 bis 30 Gew.-%, insbesondere 0,001 bis 20 Gew.-%, vorzugsweise 0,01 bis 15 Gew.-%, besonders bevorzugt 0,05 bis 10 Gew.-%, bezogen auf die kornförmigen Trägerpartikel, auf die komförmigen Trägerpartikel aufgebracht ist.

8. Brennstoffzelle nach einem der vorangehenden Ansprüche, **dadurch gekennzeichnet, daß** die katalysatorbeladenden Trägerpartikel (6a, 6b) an der betreffenden Elektrode (4a, 4b) jeweils in Auflagemengen von 1 bis 750 g/m², insbesondere 5 bis 500 g/m², vorzugsweise 10 bis 400 g/m², bevorzugt 15 bis 300 g/m², besonders bevorzugt 25 bis 250 g/m², fixiert sind und/oder daß die katalysatorbeladenden Trägerpartikel (6a, 6b) die Oberfläche der betreffenden Elektrode (4a, 4b) jeweils zu 1 bis 75 %, insbesondere 5 bis 50 %, vorzugsweise 5 bis 45 %, besonders bevorzugt 10 bis 40 %, bedeckt, und/oder die Menge an katalysatorbeladenden Trägerpartikeln (6a, 6b) derart ausgelegt ist, daß die katalysatorbeladenen Trägerpartikel (6a, 6b) an der betreffenden Elektrode (4a, 4b) jeweils in solchen Auflagemengen fixiert sind, daß Auflagemenge an Katalysator auf der betreffenden Elektrode (4a, 4b), bezogen auf den reinen Katalysator, von jeweils 0,0001 bis 10 g/m², insbesondere 0,001 bis 8 g/m², vorzugsweise 0,01 bis 6 g/m², besonders bevorzugt 0,1 bis 5 g/m², resultieren.

9. Brennstoffzelle nach einem der vorangehenden Ansprüche, **dadurch gekennzeichnet, daß** der Katalysator ein Metall oder eine Metallverbindung oder eine Mischung oder Mischverbindung von mindestens zwei Metallen oder eine Kombination von mindestens zwei Metallverbindungen ist, insbesondere ausgewählt aus der Gruppe von Alkali- und Erdalkalimetallen sowie Übergangsmetallen und deren jeweiligen Verbindungen, Mischungen und Mischverbindungen, und/oder daß der Katalysator ausgewählt ist aus der Gruppe von Platin, Silber, Gold, Palladium, Nickel, Ruthenium, Rhodium, Cer, Molybdän, Wolfram, Eisen, Mangan sowie deren Verbindungen, Mischungen und Mischverbinäungen,

10. Brennstoffzelle nach einem der vorangehenden Ansprüche, **dadurch gekennzeichnet, daß** die kornförmigen Trägerpartikel kugelförmig ausgebildet sind und/oder daß die kornförmigen Trägerpartikel mittlere Partikeldurchmesser im Bereich von 0,05 bis 1,0 mm, vorzugsweise 0,1 bis 0,8 mm, aufweisen.

11. Brennstoffzelle nach einem der vorangehenden Ansprüche, **dadurch gekennzeichnet, daß** die kornförmigen Trägerpartikel eine spezifische Oberfläche (BET) von mindestens 750 m²/g, vorzugsweise mindestens 1.000 m²/g, besonders bevorzugt mindestens 1,200 m²/g, aufweisen und/oder daß die kornförmigen Trägerpartikel eine spezifische Oberfläche (BET) von 500 bis 2.500 m²/g, insbesondere 750 bis 2.250 m²/g, vorzugsweise 900 bis 2.000 m²/g, besonders bevorzugt 1.000 bis 1.750 m²/g, aufweisen.

12. Brennstoffzelle nach einem der vorangehenden Ansprüche, **dadurch gekennzeichnet, daß** die kornförmigen Trägerpartikel ein Gesamtporenvolumen nach Gurvich von mindestens 0,55 cm³/g, vorzugsweise mindestens 0,60 cm³/g, besonders bevorzugt mindestens 0,65 cm³/g, ganz besonders bevorzugt mindestens 0,70 cm³/g, aufweisen und/oder daß die kornförmigen Trägerpartikel ein Gesamtporenvolumen nach Gurvich im Bereich von 0,5 bis 3,5 cm³/g, insbesondere 0,55 bis 3,5 cm³/g, vorzugsweise 0,60 bis 3,4 cm³/g, besonders bevorzugt 0,65 bis 3,3 cm³/g, ganz besonders bevorzugt 0,70 bis 3,2 cm³/g, aufweisen.

13. Brennstoffzelle nach einem der vorangehenden Ansprüche, **dadurch gekennzeichnet, daß** die kornförmigen Trägerpartikel Aktivkohlepartikel hoher Mikroporosität sind, insbesondere wobei die Aktivkohlepartikel durch ein Gesamtporenvolumen nach Gurvich von mindestens 0,7 cm³/g, wobei mindestens 70 % dieses Gesamtporenvolumens durch Mikroporenporen mit Porendurchmessern von s 0,2 nm (≤ 20 Å) gebildet sind, und einen mittleren Porendurchmesser von höchstens 0,3 nm (30 Å) sowie eine BET-Oberfläche von mindestens 1.500 m²/g **gekennzeichnet** sind oder daß die kornförmigen Trägerpartikel Aktivkohlepartikel mit hoher Meso- und Makroporosität sind, insbesondere wobei die Aktivkohlepartikel hoher Meso- und Makroporosität durch einen Anteil an durch Poren mit Porendurchmessern von mehr als 0,2 nm (20 Å) gebildetem Porenvolumen von mindestens 55 % des Gesamtporenvolumens und einen mittleren Porendurchmesser von mehr als 0,25 nm (25 Å) sowie eine BET-Oberfläche von mindestens 1.250 m²/g **gekennzeichnet** sind.

14. Brennstoffzellenanordnung, umfassend mindestens zwei Brennstoffzellen nach den vorangehenden Ansprüchen.

15. Verwendung einer Brennstoffzelle nach den vorangehenden Ansprüchen zu Zwecken der Energiegewinnung, insbesondere Stromerzeugung, vorzugsweise zur stationären oder mobilen Energiegewinnung.

## Claims

1. Fuel cell (1), in particular an electrochemical fuel cell, wherein the fuel cell (1) has
- a first electrode space (2) having a first electrode (4a), in particular an anode ("fuel electrode"),
- a second electrode space (3) having a second electrode (4b), in particular a cathode ("oxidant electrode") and
- an electrolyte (7) which is arranged between the first electrode space (2) and the second electrode space (3) and in particular separates the first electrode space (2) from the second electrode space (3),
where at least one of the two electrodes (4a, 4b), preferably both electrodes (4a, 4b), is provided with a catalyst which catalyses a relevant fuel cell partial reaction proceeding in the respective electrode space (2, 3) and
the catalyst has been applied to porous particulate support particles based on activated carbon and having average particle diameters in the range from 0.05 to 2.0 mm, with the catalyst-laden support particles (6a, 6b) being fixed to the respective electrode (4a, 4b) and having a specific surface area (BET) of at least 500 m²/g and a total pore volume determined by the Gurvich method of at least 0.50 cm³/g.

2. Fuel cell according to Claim 1, **characterized in that** the fuel cell (1) comprises at least one gas introduction device (5a) assigned to the first electrode space (2) and/or the first electrode (4a), in particular an anode ("fuel electrode") and/or **in that** the fuel cell (1) comprises at least one gas introduction device (5b) assigned to the second electrode space (3) and/or the second electrode (4b), in particular a cathode ("oxidant electrode").

3. Fuel cell according to Claim 1 or 2, **characterized in that** the electrolyte (7) is ion-conductive and/or proton-conductive and the electrolyte (7) is in particular selected from among dry or aqueous, in particular basic or acidic electrolytes and in particular ion-conductive and/or proton-conductive membranes, in particular polymeric electrolyte membranes such as preferably sulphonated PTFE membranes, where the membranes are, in particular, gas-impermeable and/or do not conduct electrons.

4. Fuel cell according to one or more of the preceding claims, **characterized in that** the fuel cell (1) is a low-temperature fuel cell, in particular a fuel cell which can be operated in the temperature range from 0 to 200 °C, preferably from 0 to 140 °C, more preferably from 0 to 100 °C, very particularly preferably from 0 to 80 °C.

5. Fuel cell according to any of the preceding claims, **characterized in that** the treatment of the particulate support particles with the catalyst has been carried out by means of impregnation, plasma coating or vapour deposition processes, in particular CVD (chemical vapour deposition) processes.

6. Fuel cell according to any of the preceding claims, **characterized in that** the fixing of the catalyst-laden support particles (6a, 6b) to the respective electrode (4a, 4b) has been effected by means of a binder, in particular by means of a preferably heat-resistant adhesive, where the binder has in particular been applied in dot form to the respective electrode (4a, 4b) and/or the binder covers, in particular, the surface of the catalyst-laden support particles (6a, 6b) to an extent of not more than 50 %, in particular not more than 40 %, preferably not more than 30 % or less.

7. Fuel cell according to any of the preceding claims, **characterized in that** the catalyst has been applied to the particulate support particles in amounts of from 0.0001 to 30 % by weight, in particular from 0.001 to 20 % by weight, preferably from 0.01 to 15 % by weight, particularly preferably from 0.05 to 10 % by weight, based on the particulate support particles.

8. Fuel cell according to any of the preceding claims, **characterized in that** the catalyst-laden support particles (6a, 6b) are fixed to the respective electrode (4a, 4b) in each case in applied amounts of from 1 to 750 g/m², in particular from 5 to 500 g/m², preferably from 10 to 400 g/m², more preferably from 15 to 300 g/m², particularly preferably from 25 to 250 g/m², and/or **in that** the catalyst-laden support particles (6a, 6b) in each case cover the surface of the respective electrode (4a, 4b) to an extent of from 1 to 75 %, in particular from 5 to 50 %, preferably from 5 to 45 %, particularly preferably from 10 to 40 %, and/or the amount of catalyst-laden support particles (6a, 6b) is such that the catalyst-laden support particles (6a, 6b) are fixed to the respective electrode (4a, 4b) in each case in such applied amounts that applied amounts of catalyst on the respective electrode (4a, 4b), based on pure catalyst, of in each case from 0.0001 to 10 g/m², in particular from 0.001 to 8 g/m², preferably from 0.01 to 6 g/m², particularly preferably from 0.1 to 5 g/m², result.

9. Fuel cell according to any of the preceding claims, **characterized in that** the catalyst is a metal or a metal compound or a mixture or mixed compound of at least two metals or a combination of at least two metal compounds, in particular selected from the group consisting of alkali metals and alkaline earth metals and also transition metals and their respective compounds, mixtures and mixed compounds, and/or **in that** the catalyst is selected from the group consisting of platinum, silver, gold, palladium, nickel, ruthenium, rhodium, cerium, molybdenum, tungsten, iron, manganese and their compounds, mixtures and mixed compounds.

10. Fuel cell according to any of the preceding claims, **characterized in that** the particulate support particles have a spherical shape and/or **in that** the particulate support particles have average particle diameters in the range from 0.05 to 1.0 mm, preferably from 0.1 to 0.8 mm.

11. Fuel cell according to any of the preceding claims, **characterized in that** the particulate support particles have a specific surface area (BET) of at least 750 m²/g, preferably at least 1000 m²/g, particularly preferably at least 1200 m²/g, and/or **in that** the particulate support particles have a specific surface area (BET) of from 500 to 2500 m²/g, in particular from 750 to 2250 m²/g, preferably from 900 to 2000 m²/g, particularly preferably from 1000 to 1750 m²/g.

12. Fuel cell according to any of the preceding claims, **characterized in that** the particulate support particles have a total pore volume determined by the Gurvich method of at least 0.55 cm³/g, preferably at least 0.60 cm³/g, particularly preferably at least 0.65 cm³/g, very particularly preferably at least 0.70 cm³/g, and/or **in that** the particulate support particles have a total pore volume determined by the Gurvich method in the range from 0.5 to 3.5 cm³/g, in particular from 0.55 to 3.5 cm³/g, preferably from 0.60 to 3.4 cm³/g, particularly preferably from 0.65 to 3.3 cm³/g, very particularly preferably from 0.70 to 3.2 cm³/g.

13. Fuel cell according to any of the preceding claims, **characterized in that** the particulate support particles are activated carbon particles having a high microporosity, where the activated carbon particles are in particular **characterized by** a total pore volume determined by the Gurvich method of at least 0.7 cm³/g, where at least 70 % of this total pore volume is made up by micropores having pore diameters of ≤ 0.2 nm (≤ 20 Å) and an average pore diameter of not more than 0.3 nm (30 Å) and a BET surface area of at least 1500 m²/g, or in that the particulate support particles are activated carbon particles having a high meso porosity and macroporosity, where the activated carbon particles having a high mesoporosity and macroporosity are in particular **characterized by** a proportion of pore volume formed by pores having pore diameters of greater than 0.2 nm (20 Å) of at least 55 % of the total pore volume and an average pore diameter of greater than 0.25 nm (25 Å) and a BET surface area of at least 1250 m²/g.

14. Fuel cell arrangement comprising at least two fuel cells according to any of the preceding claims.

15. Use of a fuel cell according to any of the preceding claims for purposes of energy generation, in particular power generation, preferably for stationary or mobile energy generation.

## Revendications

1. Pile à combustible (1), notamment pile à combustible électrochimique, cette pile à combustible (1) présentant
- un premier compartiment à électrode (2) contenant une première électrode (4a), notamment une anode ("électrode à combustible"),
- un deuxième compartiment à électrode (3) contenant une deuxième électrode (4b), notamment une cathode ("électrode d'oxydation"), et
- un électrolyte (7) disposé entre le premier compartiment à électrode (2) et le deuxième compartiment à électrode (3) et notamment séparant le premier compartiment à électrode (2) du deuxième compartiment à électrode (3),
au moins une des deux électrodes (4a, 4b), de préférence les deux électrodes (4a, 4b), étant équipée d'un catalyseur qui catalyse une réaction partielle de piles à combustible concernée se déroulant dans le compartiment à électrode respectif (2, 3) et
le catalyseur étant appliqué sur des particules porteuses granuleuses poreuses à base de charbon actif ayant des diamètres de particules moyens de l'ordre de 0,05 à 2,0 mm, les particules porteuses (6a, 6b) chargées en catalyseur étant fixées sur l'électrode concernée (4a, 4b) et présentant une surface spécifique (BET) d'au moins 500 m²/g et un volume total de pores suivant Gurvich d'au moins 0,50 cm³/g.

2. Pile à combustible selon la revendication 1, **caractérisée en ce que** la pile à combustible (1) englobe au moins un système d'apport de gaz (5a) associé au premier compartiment à électrode (2) et/ou à la première électrode (4a), notamment une anode ("électrode à combustible") et/ou **en ce que** la pile à combustible (1) englobe au moins un système d'apport de gaz (5b) associé au deuxième compartiment à électrode (3) et/ou à la deuxième électrode (4b), notamment une cathode ("électrode d'oxydation").

3. Pile à combustible selon la revendication 1 ou 2, **caractérisée en ce que** l'électrolyte (7) est de type conducteur ionique et/ou conducteur protonique, l'électrolyte (7) étant notamment sélectionné parmi des électrolytes secs ou aqueux, notamment basiques ou acides, et notamment des membranes conductrices ioniques et/ou conductrices protoniques, notamment des membranes électrolytiques polymériques comme de préférence des membranes sulfonées en PTFE, les membranes étant notamment de type imperméables au gaz et/ou non conductrices électroniques.

4. Pile à combustible selon l'une quelconque ou plusieurs des revendications précédentes, **caractérisée en ce que** la pile à combustible (1) est une pile à combustible à basse température, la pile à combustible pouvant être notamment utilisée dans une plage de température de 0 à 200 °C, de préférence 0 à 140 °C, préférentiellement 0 à 100 °C, de manière tout particulièrement préférentielle 0 à 80 °C.

5. Pile à combustible selon l'une quelconque des revendications précédentes, **caractérisée en ce que** le chargement des particules porteuses granuleuses avec le catalyseur se fait par imprégnation, revêtement au plasma ou procédé de vaporisation, notamment procédé CVD (dépôt chimique en phase vapeur).

6. Pile à combustible selon l'une quelconque des revendications précédentes, **caractérisée en ce que** la fixation des particules porteuses (6a, 6b) chargées en catalyseur sur l'électrode concernée (4a, 4b) se fait au moyen d'un liant, notamment au moyen d'une colle résistant de préférence à la chaleur, le liant étant en particulier appliqué ponctuellement sur l'électrode concernée (4a, 4b) et/ou le liant couvrant en particulier la surface des particules porteuses (6a, 6b) chargées en catalyseur au plus à 50 %, notamment au plus à 40 %, de préférence au plus à 30 % ou moins.

7. Pile à combustible selon l'une quelconque des revendications précédentes, **caractérisée en ce que** le catalyseur est appliqué sur les particules porteuses granuleuses dans des quantités de 0,0001 à 30 % en poids, notamment 0,001 à 20 % en poids, de préférence 0,01 à 15 % en poids, de manière particulièrement préférentielle 0,05 à 10 % en poids par rapport aux particules porteuses granuleuses.

8. Pile à combustible selon l'une quelconque des revendications précédentes, **caractérisée en ce que** les particules porteuses (6a, 6b) chargées en catalyseur sont fixées sur l'électrode concernée (4a, 4b) respectivement en quantités d'application de 1 à 750 g/m², notamment 5 à 500 g/m², de préférence 10 à 400 g/m², préférentiellement 15 à 300 g/m², de manière particulièrement préférentielle 25 à 250 g/m² et/ou **en ce que** les particules porteuses (6a, 6b) chargées en catalyseur recouvrent la surface de l'électrode concernée (4a, 4b) respectivement à raison de 1 à 75 %, notamment 5 à 50 %, de préférence 5 à 45 %, de manière particulièrement préférentielle 10 à 40 % et/ou la quantité de particules porteuses (6a, 6b) chargées en catalyseur est établie de manière à ce que les particules porteuses (6a, 6b) chargées en catalyseur soient fixées sur l'électrode concernée (4a, 4b) respectivement dans des quantités d'application telles qu'il en résulte des quantités d'application de catalyseur sur l'électrode concernée (4a, 4b) de respectivement 0,0001 à 10 g/m², notamment 0,001 à 8 g/m², de préférence 0,01 à 6 g/m², de manière particulièrement préférentielle 0,1 à 5 g/m².

9. Pile à combustible selon l'une quelconque des revendications précédentes, **caractérisée en ce que** le catalyseur est un métal ou un composé métallique ou un mélange ou un composé mixte d'au moins deux métaux ou une combinaison d'au moins deux composés métalliques notamment sélectionné(e) parmi le groupe des métaux alcalins et alcalins terreux et des métaux transitoires et leurs composés, mélanges et composés mixtes respectifs et/ou **en ce que** le catalyseur est sélectionné parmi le groupe composé du platine, de l'argent, de l'or, du palladium, du nickel, du ruthénium, du rhodium, du cérium, du molybdène, du tungstène, du fer, du manganèse et leurs composés, mélanges et composés mixtes.

10. Pile à combustible selon l'une quelconque des revendications précédentes, **caractérisée en ce que** les particules porteuses granuleuses sont réalisées en une forme sphérique et/ou **en ce que** les particules porteuses granuleuses présentent des diamètres de particules moyens de l'ordre de 0,05 à 1,0 mm, de préférence 0,1 à 0,8 mm.

11. Pile à combustible selon l'une quelconque des revendications précédentes, **caractérisée en ce que** les particules porteuses granuleuses présentent une surface spécifique (BET) d'au moins 750 m²/g, de préférence au moins 1000 m²/g, de manière particulièrement préférentielle au moins 1200 m²/g et/ou **en ce que** les particules porteuses granuleuses présentent une surface spécifique (BET) de 500 à 2500 m²/g, notamment 750 à 2250 m²/g, de préférence 900 à 2000 m²/g, de manière particulièrement préférentielle 1000 à 1750 m²/g.

12. Pile à combustible selon l'une quelconque des revendications précédentes, **caractérisée en ce que** les particules porteuses granuleuses présentent un volume de pores total suivant Gurvich d'au moins 0,55 cm³/g, de préférence au moins 0,60 cm³/g, de manière particulièrement préférentielle au moins 0,65 cm³/g, de manière tout particulièrement préférentielle au moins 0,70 cm³/g et/ou **en ce que** les particules porteuses granuleuses présentent un volume de pores total suivant Gurvich de l'ordre de 0,5 à 3,5 cm³/g, notamment 0,55 à 3,5 cm³/g, de préférence 0,60 à 3,4 cm³/g, de manière particulièrement préférentielle 0,65 à 3,3 cm³/g, de manière tout particulièrement préférentielle 0,70 à 3,2 cm³/g.

13. Pile à combustible selon l'une quelconque des revendications précédentes, **caractérisée en ce que** les particules porteuses granuleuses sont des particules de charbon actif ayant une microporosité élevée, les particules de charbon actif étant notamment constituées d'un volume de pores total suivant Gurvich d'au moins 0,7 cm³/g, au moins 70 % de ce volume de pores total étant formés de pores micropores d'un diamètre de pores ≤ 0,2 nm (≤ 20 Å) et étant **caractérisées par** un diamètre moyen de pores au plus de 0,3 nm (30 Å) et une surface BET d'au moins 1500 m²/g ou en ce que les particules porteuses granuleuses sont des particules de charbon actif ayant une méso-et une macroporosité élevées, les particules de charbon actif ayant une méso- et une macroporosité élevées étant notamment **caractérisées par** une proportion de volumes de pores constituée de pores dont le diamètre de pores est de plus de 0,2 nm (20 Å) représentant au moins 55 % du volume de pores total et un diamètre moyen de pores de plus de 0,25 nm (25 Å) et une surface BET d'au moins 1250 m²/g.

14. Dispositif de piles à combustible comprenant au moins deux piles à combustible selon les revendications précédentes.

15. Utilisation d'une pile à combustible selon les revendications précédentes à des fins de production d'énergie, notamment de génération de courant, de préférence pour la production stationnaire ou mobile d'énergie.
